# EUROPEAN PATENT APPLICATION

(11) **EP 4 637 190 A1**
(43) Date of publication of application: **22.10.2025**
(21) Application number: 24738464.7
(22) Date of filing: 02.01.2024
(51) Int. Cl.: H04W 4/06, H04W 76/27, H04W 76/00

(54) **COMMUNICATION METHOD AND APPARATUS**

(30) Priority: 08.01.2023 CN 202310022818
(71) Applicant: Huawei Technologies Co., Ltd., Shenzhen, Guangdong 518129 (CN)
(72) Inventor: LI, Bingzhao, Shenzhen, Guangdong 518129 (CN); SHA, Tong, Shenzhen, Guangdong 518129 (CN); ZHANG, Haisen, Shenzhen, Guangdong 518129 (CN)
(74) Representative: Pfenning, Meinig & Partner mbB
(86) International application number: PCT/CN2024/070228
(87) International publication number: WO 2024/146531

(57) **Abstract**

A communication method and a communication apparatus are disclosed. The method may include: entering a first state, where the first state is a radio resource control RRC inactive state or an RRC idle state; receiving multicast data in the first state; and determining, based on a first condition and/or a cell reselection process, whether to initiate access. In this way, quality of downlink multicast transmission received by a terminal device is improved.

## Description

### TECHNICAL FIELD

Embodiments of this application relate to the field of communication, and more specifically, to a communication method and apparatus.

### BACKGROUND

With few resources, a multicast broadcast service (multicast broadcast service, MBS) may simultaneously provide data for a large number of users having a same requirement, so that the network resources can be shared. In the 3rd generation partnership project (3rd generation partnership project, 3GPP) release (release, R17), a terminal device receives multicast in a connected state. For a terminal device that joins an MBS session and that is in the connected state, a network device may first send a multicast configuration to the terminal device. Further, the terminal device may receive downlink multicast transmission based on the multicast configuration.

To relieve network congestion, the R18 proposes to support the terminal device to receive the multicast in a radio resource control (radio resource control, RRC) inactive (inactive) state. For example, when the terminal device does not have a unicast service and receives only a multicast service, a network may release the terminal device to the inactive state, and the terminal device may receive the downlink multicast transmission in the inactive state. In this way, a quantity of terminal devices in the connected state in the network can be reduced, which helps relieve the network congestion, and helps save energy for the terminal device.

When the terminal device is in an RRC connected state, if the downlink multicast transmission fails to be received, the terminal device may request, via a feedback, a base station to send retransmission, to improve multicast received quality. However, the terminal device in the inactive state generally does not feed back a receiving status to the base station. If the received quality is poor, the base station cannot sense and adjust the received quality in a timely manner. Therefore, how to ensure received quality of the multicast service for the terminal device is a problem that urgently needs to be resolved.

### SUMMARY

This application provides a communication method and apparatus, so that received quality of a multicast service for a terminal device can be ensured.

In multicast transmission, after a user equipment (user equipment, UE) accesses a network, a base station may face a case of resource insufficiency, for example, congestion. In this case, the base station may release the UE to an RRC inactive state, and notify, in a multicast manner, the UE to receive multicast data. However, the UE in the inactive state generally does not feed back a receiving status to the base station. If received quality for the UE is poor, the base station cannot sense and adjust the received quality in a timely manner, and received quality of the multicast transmission cannot be ensured. In embodiments of this application, if the terminal device is released by the network to the RRC inactive state to receive the multicast data, but received quality for the terminal device in the inactive state is poor, the terminal device may initiate a connection resume process in a timely manner when necessary, to return to a connected state. In this way, the received quality of the multicast service is ensured. Preferably, embodiments of this application disclose interaction logic for performing connection resume between the UE and the base station. In this way, unnecessary connection resume can be avoided while ensuring the received quality of the multicast service.

According to a first aspect, a communication method is provided. The method may be performed by a terminal device, or may be performed by a component (for example, a chip or a circuit) of the terminal device. This is not limited in this application.

The method may include: entering a first state, where the first state is a radio resource control RRC inactive state or an RRC idle state; receiving multicast data in the first state; and determining, based on a first condition and/or a cell reselection process, whether to initiate access.

According to this method, when multicast is received in the first state, if received quality is poor, the terminal device may initiate the access, and return to a connected state to receive the multicast data. In this way, received quality of a multicast service is ensured.

In a possible design, the method further includes: receiving configuration information from a network device; and determining the first condition based on the configuration information.

In a possible design, the method includes: The configuration information is one or more thresholds, where the one or more thresholds are associated with a first measurement quantity; and the first condition includes that a measurement result of the first measurement quantity and the one or more thresholds satisfy a first relationship.

In a possible design, the method further includes: The configuration information includes a plurality of thresholds, and the configuration information includes a correspondence between each threshold and one or more multicast services; and the first condition is determined based on a threshold corresponding to a received multicast service.

In a possible design, whether to initiate the access is determined based on the first condition, and the method further includes: determining, based on the first condition and a multicast service activation status, whether to initiate the access.

According to this method, when the first condition is satisfied, the terminal device may determine, based on the multicast service activation status, whether the access needs to be initiated. If the first condition is satisfied, but the multicast service is in an inactive state, the terminal device does not need to receive the multicast data, and therefore does not need to return to the connected state. In this way, unnecessary connection access can be avoided.

In a possible design, it is determined, based on the first condition and the multicast service activation status, whether to initiate the access, the method further includes: initiating the access if the first condition is satisfied and the multicast service is active.

In a possible design, the method further includes: if the first condition is satisfied, determining, based on a measurement result in the cell reselection process, whether to initiate the access.

According to this method, when the first condition is satisfied, the terminal device may determine, based on the measurement result in the cell reselection process, whether the access needs to be initiated. If the first condition is satisfied, but the terminal device obtains, through measurement in the cell reselection process, a neighboring cell with higher received quality, the terminal device does not initiate the access. In this way, a connection failure caused by the cell reselection process interrupting a connection access process can be avoided, and the unnecessary connection access can be avoided.

In a possible design, the method further includes: initiating the access if a measurement result in a cell retransmission process does not satisfy a cell reselection condition.

In a possible design, the method further includes: if it is determined not to initiate the access, stopping a cell reselection timer and performing reselection to the neighboring cell, or performing reselection to a neighboring cell after a cell reselection timer times out.

In a possible design, the method further includes: in the cell reselection process, determining, based on the measurement result, that signal quality of the neighboring cell is higher than signal quality of a local cell; and determining that the neighboring cell cannot provide a multicast service oriented to the first state; and initiating access to the local cell.

According to this method, before performing reselection to the neighboring cell, the terminal device may determine whether the neighboring cell provides the multicast service oriented to the first state. In this way, it can be avoided that the terminal device cannot receive the multicast service due to reselection to the neighboring cell by the terminal device. In this way, the received quality of the multicast service is ensured, and the unnecessary connection access is avoided.

In a possible design, the method further includes: determining a first moment and first duration, where the first duration is a time length greater than 0 or greater than or equal to 0, the first moment is before an end moment of the cell reselection timer, and a time difference between the first moment and the end moment of the cell reselection timer is the first duration; and determining, at the first moment, that the neighboring cell cannot provide the multicast service oriented to the first state.

In a possible design, the method further includes: performing reselection from a current cell to a second cell, where the second cell is a neighboring cell of the current cell; and initiating access to the second cell if the second cell cannot provide a configuration of the multicast service oriented to the first state.

In a possible design, the method further includes: determining a cause value of the access, where the cause value is mt-Access, mo-Data, mo-Signalling, or an MBS resume indication.

In a possible design, an access category (access category) of the access is one of the following: a mobile terminated call, a data service initiated by a terminal, a signaling service initiated by a terminal, or an MBS-related access category.

In a possible design, the method further includes: determining an access barring timer; and determining, based on the first condition and/or the cell reselection process during running or at an end moment of the access barring timer, whether to initiate the access.

According to this method, the terminal device may re-determine whether to initiate the access after the access barring timer times out. After the access barring timer times out, if a receiving condition of the terminal device is improved, or the multicast service is inactive, the terminal device does not need to perform connection access again, and the terminal device may stop the connection access process. In this way, the unnecessary connection access can be avoided.

In a possible design, the access barring timer is one of the following: a timer T390 determined based on a user access control process; or a timer T302 determined based on an RRC reject message.

According to a second aspect, a communication method is provided. The method may be performed by a network device, or may be performed by a component (for example, a chip or a circuit) of the network device. This is not limited in this application.

The method may include: indicating a receive end to enter a first state, where the first state is a radio resource control RRC inactive state or an RRC idle state; providing a multicast service for the receive end in the first state; sending multicast data, where the multicast data corresponds to the multicast service; and sending configuration information, where the configuration information is for determining a first condition; and the first condition is used by the receive end to determine whether to initiate access.

According to this method, the network device may indicate, via the configuration information, a terminal device to receive multicast in the first state, but if received quality is poor, the terminal device may initiate the access, and returns to a connected state to receive the multicast data. In this way, received quality of the multicast service is ensured.

In a possible design, the method includes: The configuration information is one or more thresholds, where the one or more thresholds are associated with a first measurement quantity; and the first condition includes that a measurement result of the first measurement quantity and the one or more thresholds satisfy a first relationship.

In a possible design, the method further includes: The configuration information includes a plurality of thresholds, and the configuration information includes a correspondence between each threshold and one or more multicast services; and the first condition is determined based on a threshold corresponding to a multicast service received by the receive end.

Correspondingly, this application further provides a communication device. The device may implement the communication method according to the first aspect or the second aspect. For example, the device may be a terminal device or a network device, or may be another device that can implement the foregoing communication method. The device may implement the foregoing method by using software, hardware, or hardware executing corresponding software.

In a possible design, the device may include a processor and a memory. The processor is configured to support the device in performing a corresponding function in the method according to either of the foregoing aspects. The memory is configured to be coupled to the processor, and stores program instructions and data that are necessary for the device. In addition, the device may further include a communication interface configured to support communication between the device and another device. The communication interface may be a transceiver or a transceiver circuit.

According to still another aspect, an embodiment of this application provides a communication system. The system includes the communication device according to the foregoing aspect.

According to still another aspect of this application, a computer-readable storage medium is provided, where the computer-readable storage medium stores instructions. When the instructions are run on a computer, the computer is caused to perform the method according to the foregoing aspects.

According to still another aspect of this application, a computer program product including instructions is provided. When the computer program product runs on a computer, the computer is caused to perform the method according to the foregoing aspects.

This application further provides a chip system. The chip system includes a processor, and may further include a memory, to implement the method according to either of the foregoing aspects.

Any device, computer storage medium, computer program product, chip system, or communication system provided above is configured to perform a corresponding method provided above. Therefore, for beneficial effects that can be achieved by the device, computer storage medium, computer program product, chip system, or communication system, refer to beneficial effects of corresponding solutions in the corresponding method provided above. Details are not described herein again.

### BRIEF DESCRIPTION OF DRAWINGS

FIG. 1 is a diagram of a wireless communication system applicable to an embodiment of this application;
FIG. 2 is a diagram of several architectures applicable to an embodiment of this application;
FIG. 3 is another diagram of a scenario applicable to an embodiment of this application;
FIG. 4 is a diagram of an RRC state transition relationship according to an embodiment of this application;
FIG. 5 is a diagram of a communication method 200 according to an embodiment of this application;
FIG. 6 is a diagram of a communication apparatus 2800 according to an embodiment of this application;
FIG. 7 is a block diagram of a communication apparatus according to an embodiment of this application; and
FIG. 8 is a block diagram of a communication system according to an embodiment of this application.

### DESCRIPTION OF EMBODIMENTS

The following describes technical solutions in embodiments of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to an open access network (open RAN, O-RAN, or ORAN) and a cloud radio access network (cloud radio access network, CRAN). The technical solutions provided in this application may be further applied to device-to-device (device-to-device, D2D) communication, vehicle-to-everything (vehicle-to-everything, V2X) communication, machine-to-machine (machine to machine, M2M) communication, machine-type communication (machine-type communication, MTC), an internet of things (internet of things, IoT) communication system, or another communication system. In an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device. The technical solutions provided in this application may be further applied to a communication system in which the foregoing two or more systems are integrated.

The method provided in embodiments of this application is applicable to but is not limited to the following fields: MBMS, SC-PTM, a multicast broadcast service, multicast broadcast single frequency network (Multicast Broadcast Single Frequency Network, MBSFN), dual-channel intelligent unicast (Dual-channel intelligent unicast, DC-IU), broadcast, multicast, broadcast multicast (Broadcast Multicast), groupcast, V2X, public security (public safety), mission critical (mission critical), transparent IPv4/IPv6 multicast delivery (transparent IPv4/IPv6 multicast delivery), IPTV, software delivery over wireless (software delivery over wireless), group communication (group communication), the internet of things (Internet of things, IoT), TV video (TV Video), TV (TV), linear TV (linear TV), live (Live) streaming, broadcast services (radio services), device to device (device to device, D2D), unmanned driving (unmanned driving), automated driving (automated driving, ADS), driver assistance (driver assistance, ADAS), intelligent driving (intelligent driving), connected driving (connected driving), intelligent network driving (intelligent network driving), car sharing (car sharing), and the like.

A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, automated driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an unmanned aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or a UE is used below for description.

It should be understood that, in some scenarios, the UE may be further configured to serve as a base station. For example, the UE may act as a scheduling entity that provides a sidelink signal between UEs in a scenario such as V2X, D2D, or P2P.

In embodiments of this application, an apparatus configured to implement a function of the terminal device, namely, a terminal apparatus, may be a terminal device, or may be an apparatus, for example, a chip system or a chip, that can support the terminal device to implement the function. The apparatus may be mounted in the terminal device. In embodiments of this application, the chip system may include a chip, or may include a chip and another discrete component.

A network device in embodiments of this application may be a device configured to communicate with the terminal device. The network device may also be referred to as an access network device, a radio access network device, or a core network device. For example, the network device may be a base station. The network device in embodiments of this application may be a radio access network (radio access network, RAN) node (or device) that connects the terminal device to a wireless network. The base station may cover various names in the following in a broad sense, or may alternatively be the following names, such as a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radio-frequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that functions as a base station in D2D, V2X, and M2M communication, a network side device in a 6G network, a device that functions as a base station in a future communication system, a core network device, or the like. The base station may support networks of a same access technology or different access technologies. A specific technology and a specific device form that are used by the network device are not limited in embodiments of this application.

The base station may be fixed or mobile. For example, the aircraft may be configured to act as a mobile base station, and one or more cells may move based on a position of the mobile base station. In other examples, the aircraft may be configured as a device to communicate with another base station.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

Optionally, a plurality of RAN nodes may coordinate to assist the terminal in implementing wireless access, and different RAN nodes separately implement a part of functions of the base station. The network device in embodiments of this application may alternatively be a module or unit that completes the part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

Optionally, the CU may decouple a user plane and a control plane, to form the CU-control plane (CU-Control Plane, CU-CP) and the CU-user plane (CU-User Plane, CU-UP), and the CU-CP and the CU-UP support flexible deployment.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, the term "wireless communication" may also be referred to as "communication", and the term "communication" may also be described as "data transmission", "information transmission", or "transmission".

It should be further understood that, in this application, the "terminal device" is also referred to as a "terminal apparatus", a "terminal", or the like; the "network device" is also referred to as a "network apparatus", a "network side", or the like; and the "core network device" is also referred to as a "core network apparatus", a "core network", or the like. It should be understood that, this application may be further applied to 6G. The network device may be a core network device that functions as a base station in a future communication system. In this application, the "network device" may also be referred to as a "core network device", a "core network apparatus", a "core network", or the like.

First, a network architecture applicable to this application is briefly described.

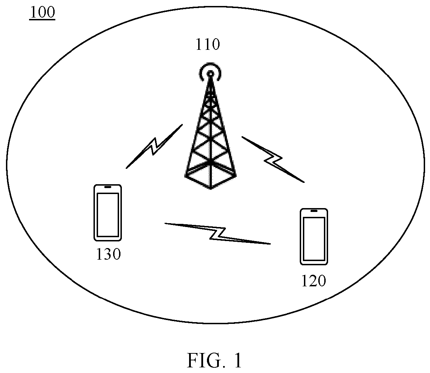

FIG. 1 is a diagram of a wireless communication system applicable to an embodiment of this application. As shown in FIG. 1, the wireless communication system 100 may include at least one network device, for example, a network device 110 shown in FIG. 1. The wireless communication system may further include at least one terminal device, such as a terminal device 120 and a terminal device 130 shown in FIG. 1. A plurality of antennas may be configured for both the network device and the terminal device, and the network device and the terminal device may communicate with each other by using a multi-antenna technology. The terminal device 120 and the terminal device 130 may directly communicate with each other, or may communicate with each other via the network device 110.

When the network device communicates with the terminal device, the network device may manage one or more cells, and the cell may have one or more terminal devices. Optionally, the network device and the terminal device form a single cell communication system. Without loss of generality, the cell is referred to as a cell #1. The network device 110 in FIG. 1 may be a network device in the cell #1, or the network device 110 may serve a terminal device (for example, the terminal device 120) in the cell #1.

It should be noted that, a cell may be understood as an area in coverage of a radio signal of the network device.

This application may be further used in a dual connectivity (dual connectivity, DC) scenario, including but not limited to an evolved universal terrestrial radio access network (evolved universal terrestrial radio access network, EUTRAN)-NR network dual connectivity (EUTRAN-NR dual connectivity, EN-DC) scenario and an NR network-NR network dual connectivity (NR-NR dual connectivity, NR-DC, or NR-NR-DC) scenario.

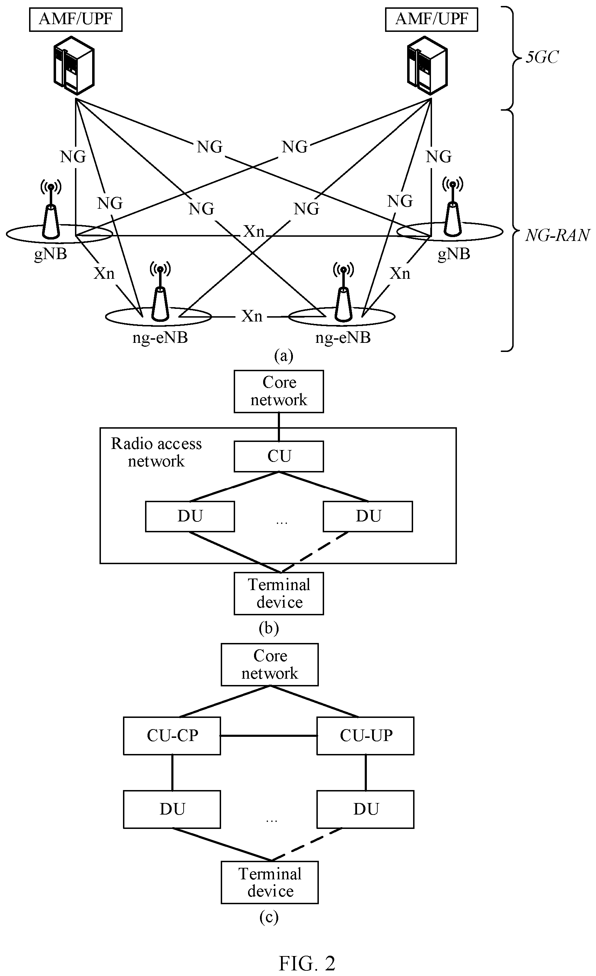

FIG. 2 is another diagram of several architectures applicable to an embodiment of this application. As shown in (a) in FIG. 2, this scenario is a diagram of an architecture of a 5G system. As shown in (a) in FIG. 2, a RAN in 5G may be referred to as a next-generation RAN (next generation RAN, NG-RAN). The NG-RAN includes two categories, namely, a gNB and a next-generation eNB (next generation eNB, NG-eNB) evolved based on LTE. Both the two categories of access network devices may be connected to a 5G core (5G core, 5GC) network. The 5GC includes a plurality of network elements, including but not limited to an access and mobility management function (access and mobility management function, AMF) and a user plane function (user plane function, UPF). In addition, the access network devices may communicate with each other through an Xn interface, and the access network devices may communicate with the 5G core network through an NG interface. For details related to the architecture, refer to a protocol definition.

This application may be further used in a carrier aggregation (carrier aggregation, CA) scenario. In the CA scenario, a plurality of cell groups may serve a terminal device. In other words, this is a technology in which a plurality of component carriers (component carriers, CCs) may be aggregated together to increase a peak rate of a terminal and a system capacity, to satisfy an increasingly high network rate requirement of the terminal. CA has two important concepts: a primary component carrier in a primary cell (primary cell, PCell) and a secondary component carrier in a secondary cell (secondary cell, SCell). After a radio resource control (radio resource control, RRC) connection is established, the secondary cell may be configured to provide an additional radio resource for data transmission, to increase the system capacity.

As shown in (b) in FIG. 2, this scenario is a scenario in which a CU and a DU are separately deployed. In the scenario, a network device includes the CU and the DU, the CU is configured to communicate with a core network, and the DU is configured to communicate with a terminal device.

As shown in (c) in FIG. 2, this scenario is a scenario in which a CU-CP, a CU-UP, and a DU are separately deployed. In the scenario, a network device includes the CU-CP, the CU-UP, and the DU. The CU-CP is configured to communicate with a control plane of a core network, the CU-UP is configured to communicate with a user plane of the core network, and the DU is configured to communicate with a terminal device.

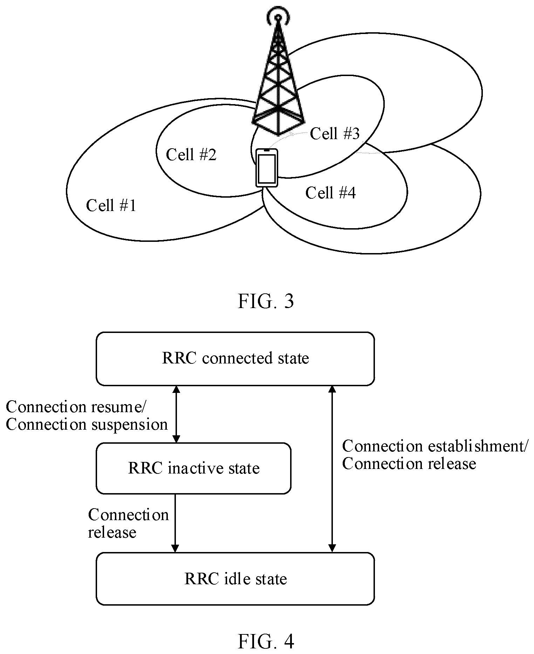

FIG. 3 is another diagram of a scenario applicable to an embodiment of this application. As shown in FIG. 3, a network device may manage a plurality of cells. A cell #1 is a primary cell of a terminal device, a cell #2, a cell #3, and a cell #4 are secondary cells of the terminal device, and CCs of the cell #1, the cell #2, the cell #3, and the cell #4 may jointly provide a service for the terminal device by using a CA technology.

For ease of understanding, related concepts in this application are described.

### 1. State of a terminal device and a transition relationship between states

A terminal device in NR has three RRC states: an RRC idle (idle) state (state), an RRC inactive (inactive) state, and an RRC connected (connected) state. In the RRC connected state (connected state for short), an RRC connection is established between the terminal device and a network device. In the RRC idle state, the RRC connection is not established between the network device and the terminal device. In the RRC inactive state, the network device still maintains context information of the terminal device. An advantage of introducing the RRC inactive state is that, in the RRC inactive state, because the network device still retains context of the terminal device, the RRC connection can be resumed more quickly than the RRC idle state, and a delay can be reduced when a service arrives. For ease of description, the RRC inactive state and the RRC idle state are collectively referred to as an RRC non-connected state in the following descriptions, that is, a terminal device in the RRC non-connected state may be a terminal device in the RRC inactive state, or may be a terminal device in the RRC idle state.

As shown in FIG. 4, a UE changes from the RRC connected state to the RRC inactive state via a connection suspension message. When the UE is released from the RRC_CONNECTED state to RRC_INACTIVE, a base station allocates an identifier: an I-RNTI (inactive radio network temporary identifier), to the UE, and stores context of the UE based on the identifier. The base station is also referred to as a last serving gNB (last serving gNB) of the UE, and sometimes is also referred to as an anchor gNB (anchor gNB). A connection between the UE and a core network is stored in the anchor base station. The UE in the connected state may be directly released to the idle state, and the UE in the inactive state may also be further released to the idle state.

The UE in the idle state or the inactive state may return to the connected state through a connection establishment procedure or a connection resume procedure. For ease of description, in embodiments of this application, initiating the connection resume procedure and initiating the connection establishment procedure by the UE are collectively referred to as initiating access by the UE. It may be understood that, initiating access in embodiments of this application may alternatively be initiating the connection resume procedure or initiating the connection establishment procedure.

### 2. Multicast broadcast service (multicast broadcast service, MBS)

With few resources, the MBS may simultaneously provide data for a large number of users having a same requirement, so that network resources can be shared. The MBS includes a multicast service and a broadcast service. The broadcast service refers to a communication service in which a network device simultaneously provides same specific content data for all terminal devices in a geographical area. The multicast service means that a network device provides a communication service for a group of terminal devices that join a multicast session (multicast session). The multicast service may be delivered to the terminal devices via the multicast session. A terminal device that is to receive multicast can receive the multicast service only after performing an authentication procedure with a core network. The authentication procedure may also be understood as a process in which the terminal device joins the multicast session. Therefore, receiving the multicast service may also be referred to as receiving a multicast session or an MBS session (MBS session), and the MBS session may be identified by a temporary mobile group identity (Temporary mobile group identity, TMGI). The multicast service may also be referred to as a multileaving service. In this application, "multicast" and "multileaving" may be mutually replaced with each other. This is not limited.

The multicast may include any one or more of the following: broadcast in an MBMS or an MBS, multicast in an MBMS or an MBS, multileaving in an MBMS or an MBS, multicast in vehicle-to-everything (Vehicle-To-Everything, V2X), multileaving in V2X, broadcast in V2X, multileaving, broadcast, multicast, groupcast, and broadcast.

The multicast service may include/alternatively be any one or more of the following: a broadcast service, a multileaving service, an MBS service, an MBS broadcast service, an MBS multileaving service, a V2X multicast service, and a V2X broadcast service.

Data corresponding to the multicast service may be referred to as multicast data.

### 3. Multicast broadcast control channel and multicast broadcast traffic channel

Two categories of logical channels are introduced in an NR MBS broadcast technology: the multicast broadcast service control channel (MBS control channel, MCCH) and the multicast broadcast traffic channel (MBS traffic channel, MTCH). The MCCH is used for transmitting control information, including configuration information of the MTCH, such as a group radio network temporary identifier (group radio network temporary identifier, G-RNTI) and a discontinuous reception (discontinuous reception, DRX) parameter that correspond to the MTCH. The MCCH is sent periodically. The MTCH logical channel is used for carrying user data of a broadcast service. The MTCH is scheduled through the MCCH. Configuration of the MTCH is a per (per) g-RNTI level, in other words, a per MBS service level. A base station simultaneously schedules service data to a plurality of UEs based on the g-RNTI, and each g-RNTI may be associated with at least one broadcast service.

It should be understood that, in different communication systems, the foregoing channels may correspond to different names. For example, in a 4th generation (4th generation, 4G) communication system, a multicast broadcast traffic control channel may be a single cell multicast broadcast traffic control channel (single cell MCCH, SC-MCCH). For another example, in a 5G communication system, the multicast broadcast traffic control channel may be an MC-MCCH. In a future technology development process, channels having a function similar to that of the multicast broadcast service traffic channel may also have other names, or channels having a same function may also have different names in different communication environments, communication scenarios, or communication technologies. However, content and functions of the channels are not limited by different names of channels having a similar or same function in different systems. In this application, the multicast broadcast control channel may be used for transmitting the control information, and the multicast broadcast traffic channel may be used for transmitting the user data.

Unless otherwise specified, in this application, the MCCH is used for representing the multicast broadcast traffic control channel, and the MTCH is used for representing the multicast broadcast traffic channel. It should be further understood that, other English abbreviations in this application are similar to this. Details are not described again. It may be understood that, the MCCH and/or the MTCH may also be used in a multicast technology.

DCI may be carried on a downlink control channel. In this application, the DCI may alternatively be a PDCCH in descriptions of the DCI, and the PDCCH may alternatively be the DCI in descriptions of the PDCCH. In this application, that an RNTI is used to scramble the PDCCH/DCI/control information may be understood as: The RNTI is used to scramble cyclic redundancy check (cyclic redundancy check, CRC) of the PDCCH/DCI/control information; or CRC of the PDCCH/DCI/control information is scrambled by the RNTI (the PDCCH/DCI/control information with the CRC scrambled by the RNTI).

### 4. Cause value of RRC establishment/resume

Based on different access identities (access identities, AIs) and service categories (access categories, ACs), a UE fills in different cause values during RRC connection establishment/resume. The AI is used for distinguishing between a common user and a special user. For example, an AI that is equal to 0 indicates the common user; AIs that are equal to 1, 2, and 11 to 15 indicate different categories of special-priority users; and AIs that are equal to 3 to 10 indicate reserved values that are currently not used. The AC is used for distinguishing between different access service categories. For example, an AC that is equal to 0 indicates a called service; an AC that is equal to 2 indicates an emergency call; and an AC that is equal to 7 indicates a data transmission service initiated by the UE. For a specific combination, refer to Table 1.

**Table 1**

| Number | Access identities | Access categories | Cause value |
|---|---|---|---|
| 1 | 1 | Any category | mps-Priority Access |
| 2 | 2 | Any category | mcs-PriorityAccess |
| 3 | 11, 15 | Any category | highPriority Access |
| 4 | 12, 13, 14 | Any category | highPriority Access |
| 5 | 0 | 0 (=MT_acc) | mt-Access |
| | | 1 (=delay tolerant) | Not applicable (NOTE 1) |
| | | 2 (=emergency) | emergency |
| | | 3 (=MO_sig) | mo-Signalling |
| | | 4 (=MO MMTel voice) | mo-VoiceCall |
| | | 5 (=MO MMTel video) | mo-VideoCall |
| | | 6 (=MO SMS and SMSoIP) | mo-SMS |
| | | 7 (=MO_data) | mo-Data |
| | | 9 (=MO IMS registration related signalling) | mo-Data |

### 5. User access control (user access control, UAC)

When congestion occurs on an access network device, a UAC mechanism may be used for preventing a part of UEs from performing access.

A specific procedure is as follows:
(1) A UE obtains UAC-BarringInfoSet information from a system information block 1 (System Information Block 1, SIB 1). The information indicates an access barring (barring) percentage factor, access barring reference time, and an access barring AI. This information is used in scenarios such as a common scenario and a specified plmn scenario.
(2) When an upper layer initiates a service or an access stratum (access stratum, AS) initiates a service, a service category AC and an access identity AI exist. The access identity AI is generally obtained from a universal subscriber identity module (universal subscriber identity module, USIM) card, and the service category AC is generated based on an actual service category. The UE compares the AI with the UAC-BarringInfoSet in the SIB 1 and performs UAC check for access based on the information indicated in the SIB 1. Check results are as follows:
   - If the UAC check for access succeeds, the access is initiated.
   - If the UAC check for access fails, a timer T390 is started based on uac-BarringTime in a UAC barring parameter. T390 is a random value. Each access category corresponds to one T390. T390 is an access rejection timer on a UE side, and is not sensed by a network side. Only when T390 times out or a cell changes, the access can be re-initiated for a corresponding access service.
(4) After the UE initiates the access, a network may send an RRC reject message to reject the access of the UE. The network may further include wait time information in the RRC reject message over an air interface. Such a protocol value is for starting a timer T302. This timer is configured to perform access barring on all access categories of the UE except AC that is equal to 0 or 2. Only when T302 times out or a cell changes, the access can be re-initiated for a corresponding access service.

### 5. Cell reselection procedure

A UE in a first state (an RRC idle (idle) state (state) or RRC inactive (inactive)) performs cell reselection measurement. The cell reselection measurement requires measurement of a local cell and a neighboring cell. If signal quality of the neighboring cell is higher than signal quality of the local cell, the UE performs reselection to the neighboring cell. Specifically, if a measurement result of the neighboring cell is greater than a measurement result of the local cell and is continuously greater than the measurement result of the local cell for a period of time, the UE performs reselection to the neighboring cell. The measurement result may be an R value (a raking value) calculated based on a reference signal measurement result, and the R value is a measurement value obtained by combining factors such as a measurement result of a cell received signal, a cell offset, and a compensation. The period of time in which the measurement result of the neighboring cell is continuously greater than the measurement result of the local cell may be configured by a network for the UE. The network may indicate a time length of the period of the time by configuring a cell reselection timer (Treselection). It may be understood that, the cell reselection timer may also have other names. This is not limited in this application.

In the NR Rel-17, a terminal device receives a multicast session in an RRC connected state. For the terminal device that joins the multicast session and that is in the RRC connected state, a network device sends an MBS multicast configuration, for example, including a multicast MRB configuration, a multicast common frequency resource (common frequency resource, CFR) configuration, a physical layer configuration (which may also be referred to as a layer 1/L1 configuration), a multicast G-RNTI, and the like, to the terminal device via dedicated signaling, for example, an RRC reconfiguration message (RRC Reconfiguration message). The network device may switch the terminal device to the RRC idle state or the RRC inactive state. A specific switching condition may be: (Temporarily) no data used for the multicast session is to be sent to the terminal device, or the like.

When there are an excessively large number of users receiving the multicast session in a cell, the following case may occur: A quantity of users receiving the multicast session exceeds a quantity that is of users in the connected state and that the cell can accommodate, which causes network congestion. To relieve the network congestion, in the Rel-18, the terminal device is supported to receive multicast in the RRC inactive state. For example, when the terminal device does not have a unicast service and has only a multicast service, the network may release the terminal device to the RRC inactive state to receive the multicast. In this way, a quantity of terminal devices in the RRC connected state in the network can be reduced, which not only helps relieve the network congestion, but also helps save energy for the terminal device.

When the terminal device is in the RRC connected state, if an MBS fails to be received, the terminal device may request, via a feedback, a base station to send retransmission, to improve MBS received quality. However, the terminal device in the inactive state generally does not feed back a receiving status to the base station. If the received quality is poor, the base station cannot sense and adjust the received quality in a timely manner. Therefore, how to ensure MBS received quality for the terminal device is a problem that urgently needs to be resolved.

In embodiments of this application, if the terminal device is released by the network to the RRC inactive state to receive multicast data, but received quality in the inactive state is poor, the terminal device may initiate a connection resume process in a timely manner when necessary, to return to the connected state. In this way, the MBS received quality is ensured. However, there is no related procedure in a conventional technology. For a specific interaction procedure of connection resume/establishment between the terminal device and the network, the following problems further need to be resolved:
Problem 1: After the terminal device is configured to be in the inactive state, how to define a condition for determining that the terminal device needs to return to the connected state for receiving, and how to configure the network?
Problem 2: If the network is configured with a condition for returning to the connected state, is the terminal device still affected by another condition?
Problem 3: How to fill in a cause value for initiating the connection resume/establishment, and how to handle a UAC process?

Based on the foregoing analysis, this application provides a communication method and apparatus. In this way, the foregoing problems can be resolved, and the MBS received quality for the terminal device is ensured. Further, unnecessary connection resume can be avoided.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

It may be further understood that, in this application, an "indication" may include a direct indication, an indirect indication, an explicit indication, or an implicit indication. When a piece of indication information is described for indicating A, it may be understood that the indication information carries A, directly indicates A, or indirectly indicates A.

In addition, "corresponding" and "associating" in this application mean that there is a correspondence or a mapping relationship between two parties. The correspondence may also be one-to-one, one-to-many, or many-to-one.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, indication of specific information may alternatively be implemented by using an arrangement sequence of a plurality of pieces of information that is agreed in advance (for example, stipulated in a protocol), to reduce indication overheads to some extent.

The following describes in detail the method provided in embodiments of this application with reference to the accompanying drawings. Embodiments provided in this application may be applied to the network architecture shown in FIG. 1, FIG. 2, or FIG. 3. This is not limited.

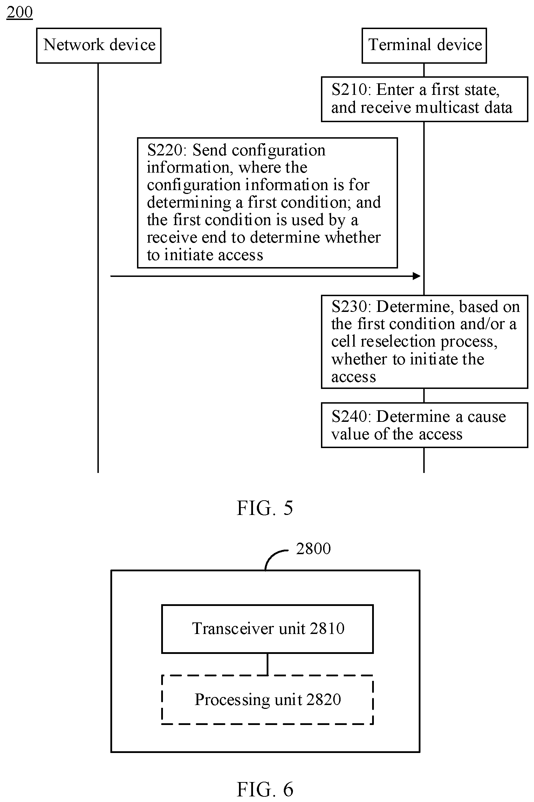

FIG. 5 is a diagram of a communication method 200 according to an embodiment of this application. The method 200 may include the following steps.
S210: A network device provides a multicast service for a receive end in a first state; and the network device sends multicast data, where the multicast data corresponds to the multicast service. Correspondingly, a terminal device enters the first state, where the first state is a radio resource control RRC inactive state or an RRC idle state; and in the first state, the terminal device receives the multicast data.

Optionally, before this step, the terminal device enters a connected state and applies to a core network for joining a multicast group, and the core network notifies the network device of quality of service (QoS) information of the multicast service that the terminal device is to join. The network device allocates a multicast bearer configuration to the terminal device based on information about the multicast service that the terminal device is to join. If the network device determines to switch the terminal device to the first state to continue receiving multicast, the network device may send an RRC release message to the terminal device, to notify the terminal device to enter the first state and continue receiving the multicast service.

It may be understood that, the network device may switch the terminal device to the first state due to various reasons, for example, network device congestion, reducing a quantity of connected users, saving more power for the terminal device through the configuration of the network device, and other factors. This is not limited in this application.

It may be understood that, the terminal device in the first state may obtain multicast data configuration information by monitoring an MCCH, and then receive the multicast data; or the terminal device in the first state may receive the multicast data by using another method. This is not limited in this application.

S220: The network device sends configuration information, where the configuration information is for determining a first condition; and the first condition is used by the receive end to determine whether to initiate access. It may be understood that, this step is optional. Correspondingly, the terminal device receives the configuration information from the network device, and may further determine the first condition based on the configuration information. It may be understood that, this step may be performed before step S210 or after step S210. This is not limited in this application.

Optionally, the configuration information may be carried in an RRC release message, an RRC reconfiguration message, or a common channel message (for example, a broadcast control channel (broadcast control channel, BCCH) message or an MCCH message).

Optionally, the configuration information is one or more thresholds, where the one or more thresholds are associated with a first measurement quantity; and the first condition includes that a measurement result of the first measurement quantity and the one or more thresholds satisfy a first relationship.

Optionally, the first measurement quantity is a category of measurement performed by the terminal device, and may be a reference signal received power (reference signal received power, RSRP), reference signal received quality (reference signal received quality, RSRQ), a signal to interference plus noise ratio (signal to interference plus noise ratio, SINR), a block error rate (block error rate, BLER) of received multicast data, or a path loss (path loss) of a received reference signal. It may be understood that, the terminal device may perform the measurement based on an SSB, or may perform the measurement based on another signal, or may perform statistical measurement based on a received data packet (for example, calculate a BLER of the received data packet). This is not limited in this application.

Optionally, the one or more thresholds may be thresholds corresponding to the RSRP, the RSRQ, the SINR, the BLER, and the path loss. It may be understood that, when a plurality of thresholds are configured, the plurality of thresholds may correspond to different measurement quantities, where for example, a part of the thresholds correspond to the RSRP, and another part of the thresholds correspond to the RSRQ; or all measurement thresholds may correspond to a same measurement quantity.

The following describes several threshold configuration manners. For ease of understanding, an RSRP threshold is used as an example for description. Manner 1: A value in the configuration information may be directly used as the RSRP threshold. Manner 2: The RSRP threshold may be obtained by calculation performed on a value in the configuration information according to a preset rule. For example, the value in the configuration information is -40, and the terminal device multiplies the value by 2, to obtain the final RSRP threshold that is -80 dBm. Manner 3: When the configuration information is the plurality of thresholds, a configuration manner of each threshold may be Manner 1 or Manner 2. Alternatively, values in the configuration information may be a reference RSRP threshold and one or more offset values. For example, a value -80 in the configuration information is the reference RSRP threshold, the values in the configuration information further include -3, and the terminal device learns, based on -80 and -3, that an RSRP threshold corresponding to the value -3 is -83 dBm. In this manner, signaling overheads can be further optimized.

Optionally, the first condition includes that the measurement result of the first measurement quantity and the one or more thresholds satisfy the first relationship. When one threshold is configured, the first relationship may be that the measurement result of the first measurement quantity is greater than the threshold or greater than or equal to the threshold, or may be that the measurement result of the first measurement quantity is less than the threshold or less than or equal to the threshold. When a plurality of thresholds are configured, one threshold may be selected from the plurality of thresholds according to a preset rule. For the first relationship in this case, refer to the case in which one threshold is configured. Alternatively, the first condition may be that the measurement result of the first measurement quantity and the one or more thresholds satisfy another first relationship that is preset or pre-configured. This is not limited in this application.

Optionally, the one or more thresholds may be configured as a measurement event defined in the 3GPP TS 38.331 protocol. For example, a measurement event A2 is used for a measurement event in which a measurement result of a serving cell is less than a first threshold. A configuration of the measurement event A2 is as follows, including a parameter such as a threshold, a hysteresis, hysteresis time, and a measurement quantity category.

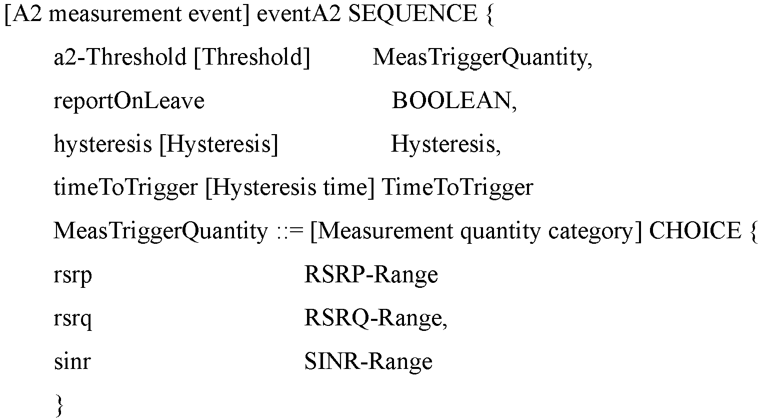

Optionally, the first condition may be that a configured measurement event is triggered. For example, a network configures the measurement event A2 for the terminal device. The terminal device measures the measurement quantity configured in the measurement event A2, and starts timing when a measurement result is greater than the configured threshold plus the hysteresis. If duration of the timing exceeds the configured hysteresis time, the measurement event A2 is triggered. After triggering, if the measurement result is less than the configured threshold minus the hysteresis, the measurement event A2 leaves (leaves) a triggering state. If the event A2 is triggered and does not leave the triggering state, it is considered that the first condition is satisfied.

In a possible design, the configuration information is sent to the terminal device in the MCCH message. The MCCH may include information about a plurality of multicast services, and the multicast service received by the terminal device may be a part of the plurality of multicast services. For example, there may be the following two cases.

Case 1: A set of common thresholds is configured for all multicast services. For all multicast services received by the terminal device, the first condition is determined by using this set of thresholds, to determine whether to initiate the access.

Case 2: A set of thresholds is configured for each of the multicast services or each multicast service group. In this case, based on the received multicast service, the terminal device may select the threshold, to determine the first condition. If the terminal device receives only one multicast service, the terminal device determines the first condition based on a threshold corresponding to the service. If the terminal device simultaneously receives a plurality of multicast services, the terminal device determines the first condition based on thresholds corresponding to the plurality of services. Specifically, that at least one of conditions corresponding to the plurality of services is satisfied may be used as a triggering condition of the first condition, or one threshold may be selected, as a threshold of the first condition, from the thresholds corresponding to the plurality of services. For example, a threshold 1 is configured for a multicast service 1, a threshold 2 is configured for a multicast service 2, and the terminal device receives both the multicast service 1 and the multicast service 2. The terminal device may separately determine the threshold 1 and the threshold 2. For a determining manner, refer to descriptions in the foregoing embodiment. Details are not described herein again. The first condition may be that determining for both the threshold 1 and the threshold 2 satisfies the descriptions in the foregoing embodiment. For example, when the threshold 1 and the threshold 2 correspond to different measurement quantity categories, the first condition may be determined in this manner. The first condition may alternatively be that determining for either of the threshold 1 and the threshold 2 satisfies the descriptions in the foregoing embodiment. A threshold used for the determining may be a threshold randomly selected from the threshold 1 and the threshold 2, or may be a threshold selected from the threshold 1 and the threshold 2 according to a specific rule. For example, when the threshold 1 and the threshold 2 correspond to a same measurement quantity category, a threshold with a higher value or a lower value may be selected, to determine the first condition. For example, a measurement quantity corresponding to the service 1 is the RSRP, and a threshold is -80 dBm, and a measurement quantity corresponding to the service 2 is the RSRP, and a threshold is -90 dBm. In this case, the user determines, based on the higher threshold -80, whether the first condition is satisfied. For another example, a measurement quantity corresponding to the service 1 is the path loss, and a threshold is 80 dB, and a measurement quantity corresponding to the service 2 is the path loss, and a threshold is 90 dB. In this case, the user determines, based on the lower threshold 80, whether the first condition is satisfied.

Optionally, in another possibility, the configuration information corresponding to the first condition may alternatively be pre-defined. For example, that a UE satisfies the first condition when the RSRP is less than -100 is pre-defined. In this case, these configurations may also be configured for the UE without using the network.

S230: The terminal device determines, based on the first condition and/or a cell reselection process, whether to initiate the access.

In an implementation, the terminal device determines the first condition by receiving the configuration information. The terminal device may determine, based on the first condition, whether to initiate the access. For example, if the first condition is satisfied, the terminal device initiates the access.

Optionally, the terminal device may determine, based on the first condition and a multicast service activation status, whether to initiate the access. When the first condition is satisfied, if the multicast service is in an active state, the terminal device initiates the access; or if the multicast service is in an inactive state, the terminal device does not initiate the access. When a multicast service activation notification is received, it is determined whether the first condition is satisfied. If the first condition is still satisfied, the access is initiated. If the first condition is not satisfied or the multicast service is in the inactive state, the multicast service continues to be received in the first state.

Optionally, the terminal device may determine, based on the first condition and measurement performed in the cell reselection process, whether to initiate the access.

It is assumed that when the first condition is satisfied, the terminal device has measured that an R value of a neighboring cell is greater than an R value of a local cell; however, the terminal device has not performed reselection to the neighboring cell, because a cell reselection timer does not time out. In this case, if the terminal device initiates the access, in a process of initiating the access, the terminal device may perform reselection to the neighboring cell because the cell reselection timer times out. Consequently, an access procedure initiated for the local cell fails, and unnecessary connection access is generated. Therefore, the terminal device may use the following method.

Optionally, when the first condition is satisfied, if signal quality of the neighboring cell is higher than signal quality of the local cell based on the measurement performed in the cell reselection process, the access is not initiated. Further, the terminal device may stop the cell reselection timer and perform reselection to the neighboring cell, or wait until the cell reselection timer times out, and then perform reselection to the neighboring cell. When the first condition is satisfied, if signal quality of the neighboring cell is lower than signal quality of the local cell based on the measurement performed in the cell reselection process, the access is initiated.

For example, when the first condition is triggered, if a neighboring cell whose R value is greater than the R value of the local cell already exists, the terminal device does not initiate the access. The terminal device may directly stop the cell reselection timer, or perform a step after the cell reselection timer times out. Further, the terminal device may perform reselection to the neighboring cell to continue receiving the multicast service. Alternatively, when the first condition is triggered, if a neighboring cell whose R value is greater than the R value of the local cell already exists, the terminal device temporarily does not initiate the access. The terminal device may wait until the cell reselection timer times out. If the cell reselection timer times out, the terminal device performs reselection to the neighboring cell. If the cell reselection timer is reset, the terminal device initiates access to the local cell. In this embodiment of this application, that the access is not initiated may mean that an access process is skipped.

Optionally, when the first condition is satisfied, if signal quality of the neighboring cell is higher than signal quality of the local cell based on the measurement performed in the cell reselection process, and the terminal device determines that the neighboring cell provides a multicast service oriented to the first state, the terminal device does not initiate the access. The multicast service may be a multicast service received by a terminal. Further, the terminal device may stop the cell reselection timer and perform reselection to the neighboring cell, or wait until the cell reselection timer times out, and then perform reselection to the neighboring cell. For example, in addition to determining the first condition and the signal quality of the neighboring cell, the terminal device further needs to determine whether the neighboring cell provides transmission of the multicast service oriented to the first state. If the neighboring cell provides the transmission of the multicast service oriented to the first state, the terminal device does not initiate the access. Refer to the foregoing embodiment. Details are not described herein again. If the neighboring cell does not provide the transmission of the multicast service oriented to the first state, the terminal device does not stop the cell reselection timer, or does not consider that the cell reselection timer times out. Further, the terminal device does not perform reselection to the neighboring cell, but initiates access to the local cell.

Optionally, when the first condition is satisfied, if signal quality of the neighboring cell is not higher than signal quality of the local cell based on the measurement performed in the cell reselection process, or the terminal device determines that the neighboring cell does not provide a multicast service oriented to the first state, the terminal device initiates the access. The multicast service may be a multicast service received by a terminal.

It may be understood that, the terminal device may learn, based on signaling of the network, whether the neighboring cell provides a multicast service that is oriented to the first state and that is received by the terminal. Specific signaling may be the MCCH message, or may be dedicated signaling such as the RRC release message or the RRC reconfiguration message. For example, on an MCCH of the serving cell, the terminal device learns of neighboring cells providing multicast services that are oriented to the first state and that are received by the terminal; or on an MCCH of the neighboring cell, the terminal device does not receive configuration information of the multicast service that is oriented to the first state and that is received by the terminal; or in the neighboring cell, the terminal device does not receive an MCCH configuration for the multicast; or the terminal device does not receive configuration information, of a multicast service that is oriented to the first state and that is related to the neighboring cell, in the RRC release message. The terminal device may alternatively perform the determining in another manner. This is not limited in this application.

Optionally, the neighboring cell in embodiments of this application may be a neighboring cell whose received signal quality ranks top or has a highest priority in a cell reselection measurement process.

Optionally, that the terminal device determines that the neighboring cell provides the multicast service oriented to the first state may alternatively be that the terminal device determines that a time difference from an end moment of the cell reselection timer is less than second duration or less than or equal to second duration, where the second duration is a time length greater than 0 or greater than or equal to 0. A time unit may be a time unit such as a symbol or a subframe, or may be an absolute time difference. For a specific implementation, refer to the foregoing embodiment. Details are not described herein again. Optionally, both whether the neighboring cell provides the multicast service oriented to the first state and duration to the end moment of the cell reselection timer may be considered. For example, in addition to determining the first condition and the signal quality of the neighboring cell, the terminal device further needs to determine whether the neighboring cell provides transmission of the multicast service oriented to the first state, and determine duration from a current moment to the end moment of the cell reselection timer. If the neighboring cell provides the transmission of the multicast service oriented to the first state, and a time difference between the current moment and the end moment of the cell reselection timer is less than the second duration or less than or equal to the second duration, the terminal device does not initiate the access. Refer to the foregoing embodiment. Details are not described herein again. If the neighboring cell does not provide the transmission of the multicast service oriented to the first state, or a time difference between the current moment and the end moment of the cell reselection timer is greater than the second duration or greater than or equal to the second duration, the terminal device does not stop the cell reselection timer, or does not consider that the cell reselection timer times out. Further, the terminal device does not perform reselection to the neighboring cell, but initiates access to the local cell.

In an implementation, the terminal device may determine, based on the cell reselection process, whether to initiate the access. In the cell reselection process, the terminal device determines, based on a measurement result, that the signal quality of the neighboring cell is higher than the signal quality of the local cell; and the terminal device determines that the neighboring cell cannot provide the multicast service oriented to the first state; and initiates the access to the local cell.

Optionally, before running of the cell reselection timer expires, or when running of the cell reselection timer expires, it is determined that the neighboring cell cannot provide the multicast service oriented to the first state. Specifically, a first moment and first duration may be determined, where the first duration is a time length greater than 0 or greater than or equal to 0, the first moment is before the end moment of the cell reselection timer, and a time difference between the first moment and the end moment of the cell reselection timer is the first duration; and at the first moment, it is determined that the neighboring cell cannot provide the multicast service oriented to the first state.

For example, in the cell reselection process, it is determined, based on the measurement result, that the signal quality of the neighboring cell is higher than the signal quality of the local cell. If the terminal device determines that the neighboring cell does not provide the transmission of the multicast service oriented to the first state, the terminal device may initiate the access to the local cell before performing reselection to the neighboring cell. In this way, the terminal device may enter the connected state to continue receiving the multicast service. This avoids data interruption caused by a case in which the multicast service cannot be received after reselection to the neighboring cell. Specifically, the terminal device may determine, at the first moment, whether the neighboring cell provides the transmission of the multicast service oriented to the first state, where the first moment may be before the end moment of the cell reselection timer. If the neighboring cell provides the transmission of the multicast service oriented to the first state, the terminal device may wait until the cell reselection timer times out, and then perform reselection to the neighboring cell. If the neighboring cell does not provide the transmission of the multicast service oriented to the first state, the terminal device may initiate the access to the local cell. The time difference between the first moment and the end moment of the cell reselection timer is the first duration, where the first duration is the time length greater than 0 or greater than or equal to 0. Optionally, the first duration may be configured by the network, for example, may be configured via the RRC release message, system information, or the MCCH. Optionally, same first duration may be configured for all the multicast services, or one piece of first duration may be configured for one multicast service, a plurality of multicast services, or a multicast service group. For details, refer to the configuration manner of the configuration information in the foregoing embodiment. Details are not described herein again. Optionally, the first duration may be a value determined inside the terminal device.

In an implementation, the terminal device may determine, based on the cell reselection process, whether to initiate the access. The terminal device performs reselection from a first cell to a second cell, where the second cell is a neighboring cell of the first cell; and initiates access to the second cell if the second cell cannot provide a configuration of the multicast service oriented to the first state.

It may be understood that, for a method for determining, by the terminal device, whether the second cell provides the configuration of the multicast service oriented to the first state, refer to related content in the foregoing embodiment. In this application, details are not described herein again.

As described above, the access process may be a connection establishment process, or may be a connection resume process. If the terminal device determines to initiate the access, the terminal device needs to determine an AC and a cause value that correspond to the access process. The AC may be used for performing UAC check, and the cause value may be used for being filled in a connection resume request message or a connection establishment request message. Details are as follows. It may be understood that, step S240 and step S250 are optional. It may be understood that, step S250 is not shown in the figure.

S240: The terminal device determines a cause value of the access, where the cause value is one of mt-Access, mo-Data, or mo-Signalling, or the cause value is an MBS resume indication.

Optionally, an access category of the access is one of the following: an access category 0 (MT_acc), an access category 7 (MO_data), an access category 3 (MO_sig), a newly defined access category, or an MBS-related access category, for example, an access category 10 (MBS connection resume).

Optionally, the terminal device determines a cause value used for connection resume or connection establishment, and sends the connection resume request message or the connection establishment request message, where the connection resume request message or the connection establishment request message includes the cause value.

Specifically, the access category 0 (MA-acc) or the access category 7 (MO-data) may be used as the AC of the access. Further, corresponding cause values, mt-Access and mo-data, may be used. MO-data corresponds to a scenario in which the terminal initiates data access, and a scenario in embodiments of this application is that the terminal device is not paged, but needs to enter the connected state to receive data. The scenario corresponding to MO-data is similar to the scenario in embodiments of this application. In addition, an advantage of using MO-data is that access control can be entered. When MO-data is used, the terminal device needs to check UAC to determine whether the access is allowed. An advantage of using MT-acc is that access corresponding to the AC may not be blocked by the UAC, and this ensures that the terminal device can resume to the connected state in a timely manner to receive the multicast service. Considering that the UE has previously entered the connected state to join the multicast service and is configured with a multicast configuration by a base station, the UE is an admitted UE. Therefore, the access control is ignored by using MT-acc, so that impact on receiving of the multicast service caused by a case in which access of an admitted terminal device is barred can be avoided. Alternatively, 3 (MO-sig) may be used as the AC of the access, and a corresponding cause value mo-Signalling may be further used. An advantage of using 3 (MO-sig) is that 3 (MO-sig) has a high access priority, and this can ensure that the terminal device can resume to the connected state in a timely manner to receive the multicast service.

A new AC value and a new cause value do not need to be introduced when the AC 0, the AC 7, and the AC 3 and corresponding cause values are used. However, the AC 0, the AC 7, and the AC 3 all correspond to access triggered by a non-access stratum (NAS) in a conventional technology, for example, when a NAS stratum has data or signaling to be sent, while several current access scenarios, for example, a scenario of access triggered by the first condition or access triggered by a case in which the multicast configuration cannot be obtained, are all access triggered by an access stratum (AS). Direct reuse of an AC value and a cause value that correspond to the access triggered by the non-access stratum imposes some special requirements on a subsequent procedure. For example, after the triggered access corresponding to the AC 0, the AC 7, and the AC 3 is blocked, the NAS stratum needs to be notified of timeout of time barring, for processing. However, in several scenarios in this embodiment, the access is triggered by the AS, and the NAS stratum does not need to be notified. Therefore, after the AC 0, the AC 7, and the AC 3 are barred, the UE is required to further determine a scenario in which an AC is used when a barring timer times out, to determine whether to notify the NAS stratum of release of access blocking. Therefore, optionally, a new AC may be defined as new access triggered by the access stratum, and is used in the access scenario described in this embodiment of this application. Further, a new cause value may be defined. For example, that AC=10 or 11 is defined, to represent the access scenario described in this embodiment of this application. It may be understood that, the newly defined AC may correspond to another value, and may also have various names, for example, poor multicast received quality, MBS mobility, MBS configuration unavailability, and MBS resume. This is not limited in this application. Similarly, optionally, the newly defined AC may use the newly defined cause value that may also have various nouns, for example, poor multicast received quality, MBS mobility, MBS configuration unavailability, and MBS resume. This is not limited in this application. Alternatively, the newly defined AC may correspond to an existing cause value, for example, mt-Access and mo-data or mo-Signalling.

S250: Optionally, the terminal device determines an access barring timer; and determines, based on the first condition and/or the cell reselection process during running or at an end moment of the access barring timer, whether to initiate the access.

Optionally, if the terminal device determines not to initiate the access, the terminal device performs one or more of the following: stopping the access barring timer; canceling the process of initiating the access; or skipping initiating the access.

Optionally, if the terminal device determines to initiate the access, the terminal device initiates the connection resume process or the connection establishment process.

Optionally, the access barring timer is one of the following: a timer T390 determined based on a user access control process; or a timer T302 determined based on an RRC reject message.

It may be understood that, in step S250, determining, based on the first condition and/or the cell reselection process, whether to initiate the access may be in any determining manner in the foregoing embodiment. Details are not described herein again.

When congestion occurs on an access network device, a UAC mechanism may be used for preventing a part of UEs from performing the access. The terminal device initiates the access process, including a process of performing the UAC check. If the UAC check succeeds, the connection resume request message or the connection establishment request message is sent. If the UAC check fails, the access process is terminated or suspended. In this case, the terminal device needs to start the timer T390. After T390 times out, the following two cases occur:
(a) If the access process is triggered by the non-access stratum (non-access stratum, NAS) , the NAS stratum is notified of release of access barring, and the NAS stratum determines whether to re-initiate the access process. If the NAS stratum determines to initiate the access, the NAS stratum re-initiates the access process.
(b) If the access process is triggered by the access stratum, the access process is re-initiated.

However, during running of the timer T390, an impact factor for determining, by the terminal device, whether to initiate the access may change, and further a determining result is changed. Therefore, in an access control procedure or an access barring process, it is valuable to determine whether to initiate the access. For example, the terminal device determines, according to the determining method in the foregoing embodiment, to initiate the access. However, in a UAC process, the terminal determines that the access is barred, and starts T390. After waiting until T390 times out, the terminal device performs the UAC check again, and determines whether to send the connection establishment request message or the connection resume request message. This is equivalent to continuing to initiate the access procedure after T390 times out. However, during the running of T390, an impact factor affecting whether to initiate the access, such as a determining result of the first condition, a multicast service activation status, or a cell reselection measurement result in the foregoing embodiment, may change. After T390 expires, received quality for the terminal device may return to a good level, and there is no need to return to the connected state. Therefore, in this scenario, it is unreasonable for the terminal device to directly perform the UAC check again after T390 expires. This causes unnecessary connection access.

Solution 1: When T390 expires, the terminal device determines, again according to the determining method described in this embodiment of this application, whether to initiate the access. If the terminal device determines not to initiate the access, the terminal device performs one or more of the following: ending the access process; canceling the access process; or no longer initiating the access process. If the terminal device determines to initiate the access, the terminal device performs the UAC check. It may be understood that, in Solution 1, the terminal device may perform determining at the end moment of the timer, or may perform determining at a moment in a period of time before the access procedure continues and after the timer expires. This is not limited in this application.

Solution 2: During the running of T390, the terminal device determines, according to the determining method described in this embodiment of this application, whether to initiate the access. If the terminal device determines not to initiate the access, the terminal device performs one or more of the following: ending the access process; stopping the timer T390; or canceling the access process. If the terminal device determines to initiate the access, after waiting until T390 times out, the terminal device performs the UAC check. It may be understood that, in Solution 2, the terminal device may perform determining at a moment during the running of the timer, or may perform determining at a moment before the timer expires. Refer to the foregoing embodiment. This is not limited in this application. Alternatively, the terminal device may continuously perform measurement and the determining during the running of the timer. If a determining result is that the access is not initiated, the terminal device ends the access process and/or stops the timer T390. In this way, the terminal device may stop the access process in a timely manner, and an unnecessary access process is avoided.

Optionally, the timer T390 in the foregoing embodiment may alternatively be the timer T302. The terminal device sends the connection resume request message or the connection establishment request message. If the terminal device receives a connection rejection indication (the RRC reject message) from the base station, and the rejection indication carries wait time, the terminal device needs to start the timer T302, and re-initiates the access process after T302 times out. Similar to processing of T390, the foregoing Solution 1 and Solution 2 may also be applied to T302.

It may be understood that, the timer T390 or T302 in the foregoing embodiment may alternatively be another timer configured to control the access of the terminal device. The timer may be an access barring timer, an access waiting timer, or the like. A name is not limited herein in this application.

Optionally, after determining, based on the first condition, to initiate the access, the terminal device determines that the UAC check fails or receives the connection rejection indication. In this case, the NAS stratum is notified, and content of notification is that returning to the connected state at the access stratum is barred. Further, barring time is reported to the NAS stratum. In this way, the NAS stratum may determine whether the service is terminated.

It should be understood that, the network device mentioned in embodiments of this application may be a base station, and a step performed by any network device may be performed by the base station, or may be performed by a CU of the base station, or may be performed by a module of the base station.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that, in the foregoing method embodiments, the method and operation implemented by the terminal device may alternatively be implemented by a component (for example, a chip or a circuit) of the terminal device. In addition, the method and operation implemented by the network device may alternatively be implemented by a component (for example, a chip or a circuit) of the network device. This is not limited.

In correspondence to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that, technical features and beneficial effects described in the foregoing method embodiments are also applicable to the following apparatus embodiments.

FIG. 6 is a diagram of a communication apparatus 2800 according to an embodiment of this application. The apparatus 2800 includes a transceiver unit 2810, and the transceiver unit 2810 may be configured to implement a corresponding communication function. The transceiver unit 2810 may also be referred to as a communication interface or a communication unit. Optionally, the apparatus 2800 may further include a processing unit 2820, and the processing unit 2820 may be configured to perform data processing.

In this embodiment of this application, the transceiver unit may be a sending unit when performing a sending step, and may be a receiving unit when performing a receiving step. In addition, the transceiver unit may alternatively be a transceiver, the sending unit may alternatively be a transmitter, and the receiving unit may alternatively be a receiver.

Optionally, the communication apparatus may be used in the terminal device in the method embodiment in FIG. 5, or may be a component, for example, a chip, that implements the method in the embodiment in FIG. 5. The communication apparatus 2800 includes:
the processing unit 2820, configured to: enter a first state, where the first state is a radio resource control RRC inactive state or an RRC idle state; and the transceiver unit 2810, configured to: receive multicast data in the first state, where the processing unit 2820 is further configured to: determine, based on a first condition and/or a cell reselection process, whether to initiate access.

Optionally, the transceiver unit 2810 is further configured to: receive configuration information from a network device; and the processing unit 2820 is further configured to: determine the first condition based on the configuration information.

Optionally, the configuration information is one or more thresholds, where the one or more thresholds are associated with a first measurement quantity; and the first condition includes that a measurement result of the first measurement quantity and the one or more thresholds satisfy a first relationship.

Optionally, the configuration information includes a plurality of thresholds, and the configuration information includes a correspondence between each threshold and one or more multicast services; and the processing unit 2820 is further configured to: determine the first condition based on a threshold corresponding to a received multicast service.

Optionally, the processing unit 2820 is further configured to: determine, based on the first condition and a multicast service activation status, whether to initiate the access.

Optionally, the access is initiated if the first condition is satisfied and the multicast service is active.

Optionally, the processing unit 2820 is further configured to: if the first condition is satisfied, determine, based on a measurement result in the cell reselection process, whether to initiate the access.

Optionally, the access is initiated if a measurement result in a cell retransmission process does not satisfy a cell reselection condition.

Optionally, the processing unit 2820 is further configured to: if it is determined not to initiate the access, stop a cell reselection timer and perform reselection to a neighboring cell, or perform reselection to a neighboring cell after a cell reselection timer times out.

Optionally, in the cell reselection process, signal quality of the neighboring cell is higher than signal quality of a local cell based on the measurement result; the processing unit 2820 is further configured to: determine that the neighboring cell cannot provide a multicast service oriented to the first state; and the processing unit 2820 is further configured to: initiate access to the local cell.

Optionally, the processing unit 2820 is further configured to: determine a first moment and first duration, where the first duration is a time length greater than 0 or greater than or equal to 0, the first moment is before an end moment of the cell reselection timer, and a time difference between the first moment and the end moment of the cell reselection timer is the first duration; and the processing unit 2820 is further configured to determine, at the first moment, that the neighboring cell cannot provide the multicast service oriented to the first state.

Optionally, the processing unit 2820 is further configured to: perform reselection from a current cell to a second cell, where the second cell is a neighboring cell of the current cell; and initiate access to the second cell if the second cell cannot provide a configuration of the multicast service oriented to the first state.

Optionally, the processing unit 2820 is further configured to: determine a cause value of the access, where the cause value is mt-Access, mo-Data, mo-Signalling, or an MBS resume indication.

Optionally, an access category (access category) of the access is one of the following: a mobile terminated call, a data service initiated by a terminal, a signaling service initiated by a terminal, or an MBS-related access category.

Optionally, the processing unit 2820 is further configured to: determine an access barring timer; and the processing unit 2820 is further configured to: determine, based on the first condition and/or the cell reselection process during running or at an end moment of the access barring timer, determine, whether to initiate the access.

Optionally, the access barring timer is one of the following: a timer T390 determined based on a user access control process; or a timer T302 determined based on an RRC reject message.

Optionally, the communication apparatus may be used in the network device in the method embodiment in FIG. 5, or may be a component, for example, a chip, that implements the method in the embodiment in FIG. 5. The communication apparatus 2800 includes:

The processing unit 2820 is configured to: indicate a receive end to enter a first state, where the first state is a radio resource control RRC inactive state or an RRC idle state; the processing unit 2820 is further configured to: provide a multicast service for the receive end in the first state; the transceiver unit 2810 is configured to: send multicast data, where the multicast data corresponds to the multicast service; and the transceiver unit 2810 is further configured to: send configuration information, where the configuration information is for determining a first condition; and the first condition is used by the receive end to determine whether to initiate access.

Optionally, the configuration information is one or more thresholds, where the one or more thresholds are associated with a first measurement quantity; and the first condition includes that a measurement result of the first measurement quantity and the one or more thresholds satisfy a first relationship.

Optionally, the configuration information includes a plurality of thresholds, and the configuration information includes a correspondence between each threshold and one or more multicast services; and the processing unit 2820 is further configured to: determine the first condition based on a threshold corresponding to a multicast service received by the receive end.

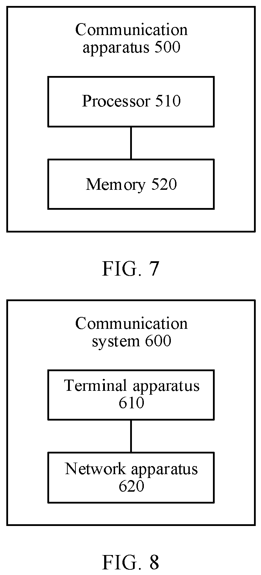

An embodiment of this application provides a communication apparatus 500. FIG. 7 is a block diagram of another communication apparatus according to an embodiment of this application. The communication apparatus 500 includes a processor 510. The processor 510 is coupled to at least one memory 520. The processor 510 is configured to read a computer program stored in the at least one memory 520, to perform the method in any possible implementation of embodiments of this application.

The processor 510 may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the method, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in this field, such as a random access memory, a flash memory, a read-only memory, a programmable read-only memory, an electrically erasable programmable memory, or a register. The storage medium is located in the memory. The processor reads information in the memory, and completes the steps of the foregoing method in combination with hardware of the processor.

The foregoing memory 520 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application provides a communication chip, including a processor and a communication interface. The processor is configured to read instructions or a computer program, to perform the method in embodiments of this application.

An embodiment of this application provides a communication system 600, including a terminal apparatus 610 and a network apparatus 620 in the communication method provided in embodiments of this application FIG. 8 is a block diagram of a communication system 600 according to an embodiment of this application.

An embodiment of this application further provides a computer-readable storage medium. The computer-readable storage medium stores a computer program used for implementing the method in embodiments of this application. When the computer program runs on a computer, the computer is caused to implement the method in the foregoing method embodiments.

An embodiment of this application further provides a computer program product. When the computer program product runs on a computer, the computer is caused to perform the method in embodiments of this application.

It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It may be understood that, in this application, "when", "provided", and "if" all mean that an apparatus performs corresponding processing in an objective case, and are not intended to limit time, and do not mean that the apparatus is required to have a determining action during implementation, and do not mean any other limitation.

A person skilled in the art may understand that, various numbers such as first and second in this application are merely used for differentiation for ease of description, but are not used for limiting the scope of embodiments of this application. A specific value of a number (which may also be referred to as an index), a specific value of a quantity, and a position in this application are merely used as examples, but are not unique representation forms, and are not used for limiting the scope of embodiments of this application. Various numbers such as first and second in this application are merely used for differentiation for ease of description, but are not used for limiting the scope of embodiments of this application.

In addition, the term "and/or" in this application merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects. The term "at least one" in this application may indicate "one" and "two or more". For example, at least one of A, B, and C may indicate the following seven cases: Only A exists, only B exists, only C exists, both A and B exist, both A and C exist, both C and B exist, and A, B, and C exist.

A person of ordinary skill in the art may be aware that, in combination with examples described in embodiments disclosed in this specification, units and algorithm steps may be implemented by electronic hardware or a combination of computer software and electronic hardware. Whether the functions are performed in a hardware or software manner depend on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing systems, apparatuses, and units, refer to a corresponding process in the foregoing method embodiments. Details are not described herein again.

In several embodiments provided in this application, it should be understood that, the disclosed systems, apparatuses, and method may be implemented in other manners. For example, the apparatus embodiments described above are merely an example. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or the units may be implemented in electronic, mechanical, or other forms.

Units described as separate parts may or may not be physically separate, and parts displayed as units may or may not be physical units, to be specific, may be located in one place, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be embodied in a form of a software product. The computer software product is stored in a storage medium, and includes several instructions for instructing a computer device (which may be a personal computer, a server, a network device, or the like) to perform all or a part of steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
entering a first state, wherein the first state is a radio resource control RRC inactive state or an RRC idle state;
receiving multicast data in the first state, wherein the multicast data corresponds to a first multicast service; and
determining, based on a first condition, whether to initiate access, wherein the first condition comprises that a measurement result of a first measurement quantity and a first threshold in one or more thresholds satisfy a first relationship, each threshold in the one or more thresholds corresponds to one multicast service or one group of multicast services, and the first threshold corresponds to the first multicast service.

2. The method according to claim 1, wherein the method further comprises:
receiving configuration information from a network device, wherein the configuration information indicates the one or more thresholds.

3. The method according to claim 2, wherein the configuration information is carried in an RRC release message, an RRC reconfiguration message, or a common channel message, wherein the common channel message is a broadcast control channel BCCH message or a multicast broadcast service control channel MCCH message.

4. The method according to any one of claims 1 to 3, wherein each threshold in the one or more thresholds is associated with the first measurement quantity, and the first measurement quantity is a reference signal received power RSRP, reference signal received quality RSRQ, a signal to interference plus noise ratio SINR, a block error rate BLER of received multicast data, or a path loss of a received reference signal.

5. The method according to any one of claims 1 to 4, wherein determining, based on the first condition, whether to initiate the access comprises: determining, based on the first condition and a multicast service activation status, whether to initiate the access.

6. The method according to claim 5, wherein determining, based on the first condition and the multicast service activation status, whether to initiate the access comprises:
initiating the access if the first condition is satisfied and the first multicast service is active.

7. The method according to any one of claims 1 to 6, wherein the method further comprises: determining a cause value of the access, wherein the cause value is mt-Access.

8. The method according to any one of claims 1 to 7, wherein an access category (access category) of the access is one of the following: a mobile terminated call.

9. The method according to any one of claims 1 to 8, wherein the method further comprises:
determining an access barring timer; and
after the access barring timer expires, determining, based on the first condition, whether to initiate the access.

10. The method according to claim 9, wherein the access barring timer is one of the following:
a timer T390 determined based on a user access control process; or
a timer T302 determined based on an RRC reject message.

11. A communication method, comprising:
providing a first multicast service for a terminal device in a first state, wherein the first state is a radio resource control RRC inactive state or an RRC idle state;
sending multicast data, wherein the multicast data corresponds to the first multicast service; and
sending configuration information, wherein the configuration information is used by the terminal device to determine, based on a first condition, whether to initiate access, wherein the first condition comprises that a measurement result of a first measurement quantity and a first threshold in one or more thresholds satisfy a first relationship, each threshold in the one or more thresholds corresponds to one multicast service or one group of multicast services, and the first threshold corresponds to the first multicast service.

12. The method according to claim 11, wherein
the configuration information indicates the one or more thresholds.

13. The method according to claim 11 or 12, wherein
the configuration information is carried in an RRC release message, an RRC reconfiguration message, or a common channel message, wherein the common channel message is a broadcast control channel BCCH message or a multicast broadcast service control channel MCCH message.

14. The method according to any one of claims 11 to 13, wherein each threshold in the one or more thresholds is associated with the first measurement quantity, and the first measurement quantity is a reference signal received power RSRP, reference signal received quality RSRQ, a signal to interference plus noise ratio SINR, a block error rate BLER of received multicast data, or a path loss of a received reference signal.

15. A communication apparatus, comprising a module configured to perform the method according to any one of claims 1 to 10.

16. A communication apparatus, comprising a module configured to perform the method according to any one of claims 11 to 14.

17. A computer-readable storage medium, comprising instructions, wherein when the instructions are run on a computer, the computer is caused to perform the method according to any one of claims 1 to 10, or the computer is caused to perform the method according to any one of claims 11 to 14.

18. A computer program product, comprising instructions, wherein when the instructions are run on a computer, the computer is caused to perform the method according to any one of claims 1 to 10, or the computer is caused to perform the method according to any one of claims 11 to 14.

19. A communication system, comprising a first communication apparatus and a second communication apparatus, wherein the first communication apparatus is configured to perform the method according to any one of claims 1 to 10, and the second communication apparatus is configured to perform the method according to any one of claims 11 to 14.
